# EUROPÄISCHE PATENTSCHRIFT

(11) **EP 0 652 295 B1**
(45) Veröffentlichungstag und Bekanntmachung des Hinweises auf die Patenterteilung: **10.03.1999**
(21) Anmeldenummer: 93810780.2
(22) Anmeldetag: 10.11.1993
(51) Int. Cl.: C22B 21/00

(54) **Verfahren und Vorrichtung zur umweltgerechten Rückgewinnung von Aluminium aus Abfällen**
Method and apparatus for non-polluting recuperation of aluminium from scrap
Procédé et appareil de récupération non polluant d'aluminium à partir de déchets

(43) Veröffentlichungstag der Anmeldung: 10.05.1995
(73) Patentinhaber: ALUMINIUM RHEINFELDEN GmbH, 79618 Rheinfelden (DE)
(72) Erfinder: Franke, Alois, D-79618 Rheinfelden (DE)
(74) Vertreter: Patentanwälte Breiter + Wiedmer AG

(56) Entgegenhaltungen:
- EP-A- 0 050 795
- EP-A- 0 068 901
- EP-A- 0 314 404
- EP-A- 0 486 759
- US-A- 4 060 408
- US-A- 4 523 949

## Beschreibung

Die Erfindung betrifft ein Verfahren zur umweltgerechten Rückgewinnung von Aluminium und Aluminiumlegierungen aus mit organischen Verbindungen behafteten Materialien durch Umschmelzen in einem eine Schmelzkammer sowie einen Hauptherd aufweisenden Sidewell-Schmelzofen und Reinigung der Rauchgase. Im Rahmen der Erfindung liegt weiter eine zur Durchführung des Verfahrens geeignete Vorrichtung.

Bekannte Verfahren (s. zum Beispiel US-A-4 060 408) zur Rückgewinnung von Aluminium aus Abfällen benutzen Salztrommelöfen oder Mehrkammerherdöfen, denen jeweils eine Abfallaufbereitung vorgeschaltet ist. All diesen Verfahren ist gemeinsam, dass ihre Dioxin- und Furanemission -- angegeben als Summenwert nach dem im Anhang zur 17. Verordnung zur Durchführung des Bundes-Immisionsschutzgesetzes der Bundesrepublik Deutschland (17. BIMSchV) festgelegten Verfahren -- ohne Verdünnung den dort definierten Grenzwert von 0,1 ng/m³ überschreitet. Allenfalls kann dieser Grenzwert durch die Anwendung eines Aktivkohlefilters erreicht werden, welcher seinerseits dann mit Dioxinen und Furanen belastet ist. Auch Filterstäube sind bei diesen Verfahren mit Dioxinen und Furanen behaftet.

Angesichts dieser Gegebenheiten hat sich der Erfinder die Aufgabe gestellt, ein Verfahren sowie eine Vorrichtung zu schaffen, welche es ermöglichen, Dioxine und Furane im Abgas und in den Filterstäuben zu vermeiden und den Grenzwert der obenerwähnten 17. BIMSchV einzuhalten.

Zur erfindungsgemässen Lösung der Aufgabe führt beim Verfahren, dass die Temperatur im Hauptherd auf mindestens 1200°C eingestellt wird, die Rauchgase in dem Hauptherd während einer Verweilzeit von mindestens 5 sec bei dieser Temperatur gehalten und nachfolgend auf eine Temperatur von weniger als 100°C abgeschreckt werden.

Durch die Einhaltung der erwähnten Verfahrensparameter wird einerseits sichergestellt, dass die während des Umschmelzvorgangs durch Zersetzung der den Abfällen aus Aluminium anhaftenden organischen Verbindungen entstehenden Dioxine und Furane durch die nachfolgende Hochtemperaturbehandlung zerstört werden und andererseits das Abschrecken der heissen Abgase die Rekombination zu Dioxinen und Furanen verhindert.

Die Aufrechterhaltung einer Temperatur von mindestens 1200°C wird am geeignetsten durch die Verwendung von Sauerstoffbrennern erreicht, wobei als Brenngas bevorzugt Erdgas eingesetzt wird. Um einen Austritt von Ofengasen in die Fabrikhalle zu vermeiden, wird der Ofenraum auf Unterdruck geregelt. Die Energiezufuhr erfolgt im Hauptherd über die Gas-Sauerstoffbrenner, wobei eine Zirkulation des flüssigen Metalls vom Hauptherd in die Schmelzkammer und wieder zurück in den Hauptherd aufrechterhalten wird.

Das Abschrecken der Rauchgase nach Verlassen des Hauptherds wird bevorzugt mit Wasser durchgeführt.

Eine zur Durchführung des erfindungsgemässen Verfahrens geeignete Vorrichtung mit einem eine Schmelzkammer sowie einen Hauptherd aufweisenden Sidewell-Schmelzofen zeichnet sich erfindungsgemäss dadurch aus, dass dem Schmelzofen eine Abschreckeinrichtung oder Quenche zum Abschrecken der aus dem Hauptherd austretenden Rauchgase nachgeschaltet ist.

Zweckmässigerweise ist der Schmelzkammer eine Beschickungseinrichtung zum Beschicken der Schmelzkammer vorgeschaltet, wobei Rauchgase des Schmelzofens zum Trocknen der umzuschmelzenden Materialien in die Beschickungseinrichtung eingeführt werden können.

Zum Ueberführen der Rauchgase von der Schmelzkammer in den Hauptherd kann zwischen Schmelzkammer und Hauptherd eine Ueberführungsleitung angeordnet sein.

Zur Aufrechterhaltung einer Zirkulation des flüssigen Metalls ist bevorzugt eine den Hauptherd mit der Schmelzkammer verbindende Pumpkammer mit einer Metallpumpe vorgesehen.

Ueblicherweise werden die Aluminiumabfälle vor der Beschickung zerkleinert, mit geeigneten Verfahren nach Dichte sortiert und/oder mittels Magnetabscheidung von Eisenteilen befreit und anschliessend in der geschlossenen Beschickungseinrichtung oder Chargierkammer vor dem Einrühren in flüssiges Aluminium in der Schmelzkammer mit den Rauchgasen des Hauptherdes getrocknet. Dem Brennersystem des Hauptherdes wird der aus der Schmelzkammer und der Chargierkammer abgesaugte Rauch zugeführt.

Gegenüber den vorbekannten Verfahren lassen sich die Vorteile des erfindungsgemässen Verfahrens sowie der entsprechenden Vorrichtung wie folgt zusammenfassen:
1. Zerstörung eventuell vorhandener Dioxine und Furane im Hauptherd
   Durch Verwendung von Sauerstoffbrennern wird die Abgastemperatur über 1200°C erhöht und der Abgasvolumenstrom im Vergleich zum Luftbrenner reduziert. Dies erhöht die Verweilzeit des Abgases im Ofenraum. Vorhandene Dioxine und Furane werden zerlegt. Gleichzeitig wird die NOₓ-Bildung soweit verhindert, dass der Emissionsgrenzwert von 250 mg/Nm³ sicher unterschritten wird.
2. Vermeidung der Neubildung von Dioxinen und Furanen
   Durch die unmittelbare Ueberführung der Ofenabgase in eine Quenche wird die Neubildung von Dioxinen und Furanen vermieden und der Emissionsgrenzwert von 0,1 ng/Nm³ sicher unterschritten.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- - Fig. 1: das Funktionsschema eines schematisch in Draufsicht dargestellten Sidewell-Schmelzofens;
- - Fig. 2: das Abgasschema des Sidewell-Ofens von Fig. 1;
- - Fig. 3: das Konzeptschema des Sidewell-Ofens von Fig. 1.

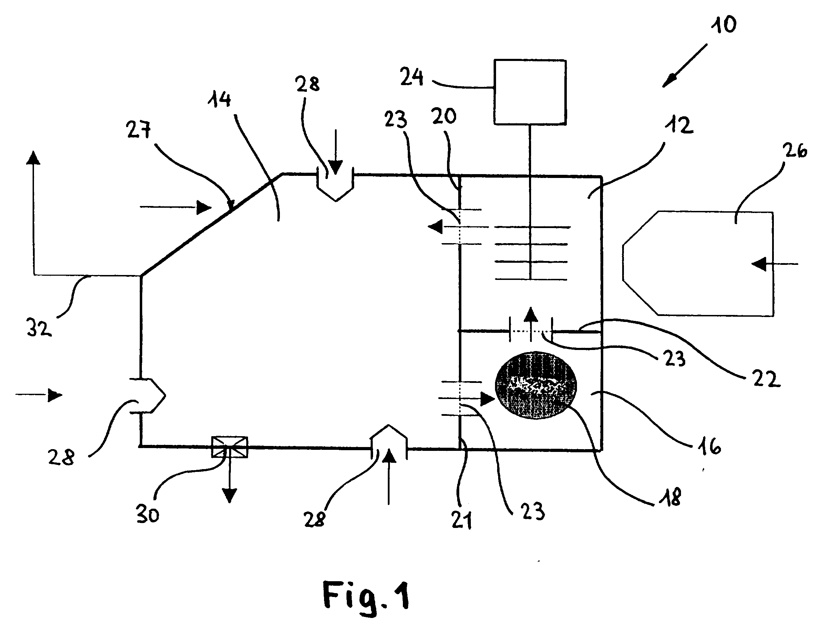

Ein in Fig. 1 schematisch dargestellter, gegenüber der Aussenatmosphäre geschlossener Sidewell-Schmelzofen 10 weist eine Schmelzkammer 12 -- den sogenannten Sidewell -- auf, an welche ein Hauptherd 14 grenzt. Die Schmelzkammer 12 und der Hauptherd 14 stehen mit einer Pumpkammer 16, welche eine Metallpumpe 18 beinhaltet, in Verbindung. Die Schmelzkammer 12, der Hauptherd 14 und die Pumpkammer 16 sind durch jeweils eine Tauchwand 20, 21 bzw. 22 mit bodennahen Verbindungsöffnungen 23 untereinander verbunden. In den Hauptherd 14 ragen mit Erdgas und Sauerstoff betriebene Brenner 28 ein.

Die Entnahme von flüssigem Metall aus dem Hauptherd erfolgt über eine Abstichöffnung 30.

Eine Beschickungseinrichtung 26 zum Beschicken der Schmelzkammer 12 dient der Aufnahme von Aluminiumabfällen aller Art wie beispielsweise Schrotte, Offsetbleche, Späne und sonstiges gebrauchtes Aluminium. Die in die Schmelzkammer 12 zugegebenen Aluminiumabfälle werden dort über eine Einrührvorrichtung 24 in die bereits vorhandene Metallschmelze eingerührt. Das flüssige Aluminium im Hauptherd 14 wird durch die Metallpumpe 18 unter der Tauchwand 21 über deren bodennahe Oeffnung in die Pumpkammer 16, von der Pumpkammer 16 unter der Tauchwand 22 hindurch in die Schmelzkammer 12 und von dieser unter der Tauchwand 20 hindurch wieder zurück in den Hauptherd geführt. Die Steuerung der Rauchgastemperatur erfolgt hierbei im Hauptherd 14 über die Brenner 28, welche so geregelt sind, dass im Ofenraum 14 oberhalb der Schmelze 1200°C nie unterschritten wird.

Während der Zirkulation des Flüssigmetalls wird durch eine Argon-Chlor-Eindüsung in die metalldurchströmte Pumpkammer 16 das flüssige Aluminium gereinigt: Alkali- und Erdalkalimetalle werden verschlackt, nichtmetallische Schwebeteilchen werden flotiert und der Wasserstoff wird aus der Schmelze entfernt. Auch Magnesium kann auf diese Weise, falls erforderlich, entfernt werden. Je nach gewünschter Gattierung des Umschmelzmetalls können zusätzlich zu den Aluminiumabfällen Masseln und Profile über eine im einzelnen nicht dargestellte Zugabeeinrichtung 27 direkt dem Flüssigmetall im Hauptherd 14 zugegeben werden. Die Ofenabgase verlassen den Hauptherd 14 über eine Abgasleitung 32.

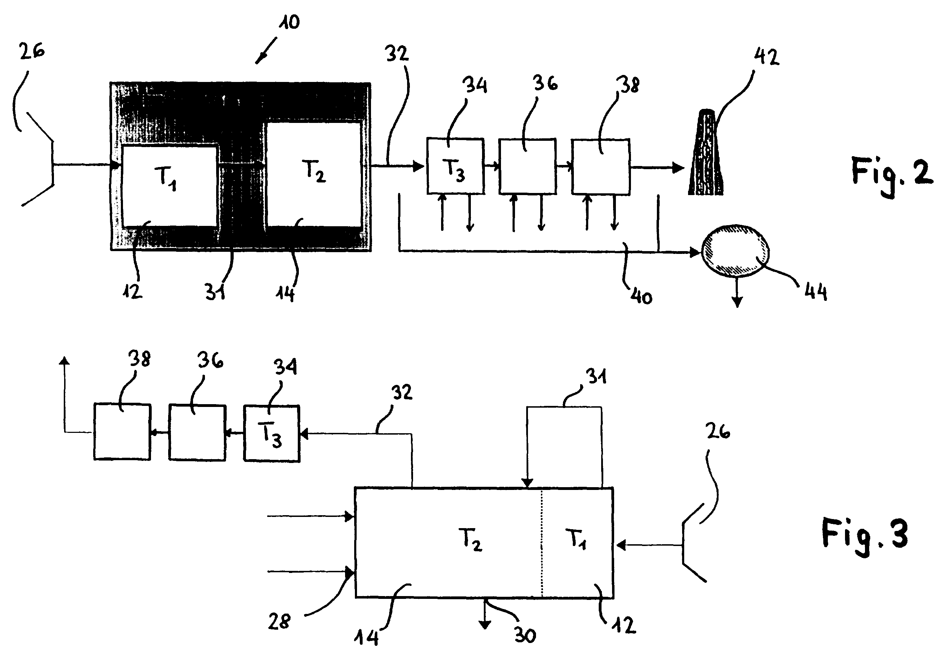

Die Abführung und Reinigung der Ofenabgase ist in Fig. 2 dargestellt. In der Schmelzkammer 12 werden die über die Beschickungseinrichtung 26 zugeführten Aluminiumabfälle beim Einrühren in die Flüssigaluminiumschmelze zunächst erhitzt, wodurch die anhaftenden organischen Bestandteile wie Lacke, Fette, Oele und dgl. sich zersetzen bzw. verdampfen und das Rauchgas bilden. Die Rauchgastemperatur T₁ in der Schmelzkammer ist variabel. Von der Schmelzkammer 12 gelangen die Rauchgase über eine Ueberführungsleitung 31 in den Hauptherd 14, in welchem die Rauchgastemperatur T₂ über die mit Erdgas und Sauerstoff betriebenen Brenner 28 auf mindestens 1200°C gehalten wird.

Nach einer Verweilzeit des Rauchgases im Hauptherd 14 von mindestens 5 sec bei der Temperatur T₂ von mindestens 1200°C verlässt dieses den Hauptherd 14 und wird über eine Abgasleitung 32 einer Quenche 34 zugeführt, in welcher das mindestens 1200°C heisse Abgas in Sekundenbruchteilen auf eine Temperatur T₃ von weniger als 100°C abgekühlt wird. Die Erhitzung der Rauchgase im Hauptherd 14 auf eine Temperatur T₂ von mindestens 1200°C während mindestens 5 sec bewirkt eine vollständige Zerstörung bzw. Zersetzung der verschiedenen Kohlenwasserstoffverbindungen, insbesondere der Dioxine und Furane. Die anschliessend in der Quenche 34 durchgeführte Abschreckung mit Wasser verhindert die Rekombination der aufgespaltenen organischen Verbindungen zu Dioxinen und Furanen.

Der aus der Quenche 34 austretende abgekühlte Abgasstrom wird nachfolgend zum Auswaschen der sauren Gaskomponenten in einen vorzugsweise mit verdünnter Natronlauge betriebenen Gegenstromwäscher 36 eingeleitet. Nach dem Austritt aus dem Gegenstromwäscher 36 erfolgt eine Staubabscheidung in einem mit Wasser betriebenen Venturi-Wäscher aus welchem das derart gereinigte Abgas über einen Kamin 42 in die Atmosphäre abgeleitet wird. Schwermetalle wie beispielsweise Blei, Quecksilber, Zinn, Kadmium und Zink, welche mit den Aluminiumabfällen in die Schmelze gelangt sind, gehen bei der Betriebstemperatur des Schmelzofens aufgrund ihres Dampfdruckes ins Abgas über und werden in der wässrigen Stufe, d.h. in der Quenche 34, im Gegenstromwäscher 36 oder im Venturi-Wäscher 38, abgeschieden. Das schadstoffbeladene Abwasser aus der wässrigen Stufe fliesst in ein Sedimentationsbecken 40, in welchem sich die Feststoffe absetzen und später als Schlamm ausgetragen werden. Die aus der Quenche 34, dem Gegenstromwäscher 36 und dem Venturi-Wäscher 38 austretenden Kühl- bzw. Waschflüssigkeiten werden zum überwiegenden Teil aufbereitet und wieder verwendet. Ein Teil des Abwassers wird aus dem Sedimentationsbecken 40 ausgeschleust und zur Behandlung einer Abwasserreinigungsanlage 44 zugeführt.

Das Konzept des Sidewell-Schmelzofens 10 ist in Fig. 3 schematisch dargestellt. Ueber die Beschickungseinrichtung 26 werden die Aluminiumabfälle der Schmelzkammer 12 zugeführt. Die dort entstehenden Rauchgase einer Temperatur T₁ von z.B. 300°C werden über eine Ueberführungsleitung 31 in den Hauptherd 14 geführt, wobei über die mit Erdgas und Sauerstoff betriebenen Brenner 28 eine Abgastemperatur T₂ von mindestens 1200°C aufrecht erhalten wird. Das flüssige Aluminium, dessen Zusammensetzung ggf. durch Zugabe von Masseln und Profilen über eine Zugabeeinrichtung 27 direkt in den Hauptherd 14 verändert werden kann, wird von Zeit zu Zeit über die Abstichöffnung 30 entnommen. Die im Hauptherd 14 auf eine Temperatur T₂ von mindestens 1200°C erhitzten und auf dieser Temperatur während mindestens 5 sec gehaltenen Rauchgase werden über die Abgasleitung 32 nacheinander der Quenche, dem Gegenstromwäscher und dem Venturi-Wäscher 38 zugeführt und anschliessend über den Kamin 42 an die Atmosphäre abgegeben.

## Patentansprüche

1. Verfahren zur umweltgerechten Rückgewinnung von Aluminium und Aluminiumlegierungen aus mit organischen Verbindungen behafteten Materialien durch Umschmelzen in einem eine Schmelzkammer (12) sowie einen Hauptherd (14) aufweisenden Sidewell-Schmelzofen (10) und Reinigung der Rauchgase, wobei die Rauchgase aus der Schmelzkammer (12) in den Hauptherd (14) geleitet werden,
dadurch gekennzeichnet,
dass die Temperatur (T₂) im Hauptherd (14) auf mindestens 1200°C eingestellt wird, die Rauchgase in dem Hauptherd (14) während einer Verweilzeit (t) von mindestens 5 sec bei dieser Temperatur (T₂) gehalten und nachfolgend auf eine Temperatur (T₃) von weniger als 100°C abgeschreckt werden.

2. Verfahren nach Anspruch 1, dadurch gekennzeichnet, dass die Temperatur (T₂) im Hauptherd (14) durch Verbrennung eines Gases, insbesondere Erdgas, mit Sauerstoff aufrechterhalten wird.

3. Verfahren nach Anspruch 1 oder 2, dadurch gekennzeichnet, dass die Atmosphäre im Schmelzofen (10) auf Unterdruck geregelt wird.

4. Verfahren nach einem der Ansprüche 1 bis 3, dadurch gekennzeichnet, dass eine Zirkulation des flüssigen Metalls vom Hauptherd (14) in die Schmelzkammer (12) und wieder zurück in den Hauptherd (14) aufrechterhalten wird.

5. Verfahren nach einem der Ansprüche 1 bis 4, dadurch gekennzeichnet, dass das Abschrecken der Rauchgase mit Wasser durchgeführt wird.

6. Vorrichtung zur Durchführung des Verfahrens nach einem der Ansprüche 1 bis 5, mit einem eine Schmelzkammer (12) sowie einen Hauptherd (14) aufweisenden Sidewell-Schmelzofen (10), dadurch gekennzeichnet, dass dem Schmelzofen (10) eine Abschreckeinrichtung (34) zum Abschrecken der aus dem Hauptherd (14) austretenden Rauchgase nachgeschaltet ist.

7. Vorrichtung nach Anspruch 6, dadurch gekennzeichnet, dass der Schmelzkammer (12) eine Beschickungseinrichtung (26) zum Beschicken der Schmelzkammer (12) vorgeschaltet ist, wobei Rauchgase des Schmelzofens (10) zum Trocknen der umzuschmelzenden Materialien in die Beschickungseinrichtung (26) führbar sind.

8. Vorrichtung nach Anspruch 6 oder 7, dadurch gekennzeichnet, dass zwischen Schmelzkammer (12) und Hauptherd (14) eine Ueberführungsleitung (31) zum Ueberführen der Rauchgase von der Schmelzkammer (12) in den Hauptherd (14) angeordnet ist.

9. Vorrichtung nach einem der Ansprüche 6 bis 8, dadurch gekennzeichnet, dass im Hauptherd (14) Gas-Sauerstoffbrenner (28) angeordnet sind.

10. Vorrichtung nach einem der Ansprüche 6 bis 9, dadurch gekennzeichnet, dass zur Zirkulation des flüssigen Metalls eine den Hauptherd (14) mit der Schmelzkammer (12) verbindende Pumpkammer (16) mit einer Metallpumpe (18) angeordnet ist.

## Claims

1. Process for the non-polluting recuperation of aluminium and aluminium alloys from materials containing organic compounds by remelting in a Sidewell smelting furnace (10) containing a smelting chamber (12) and the main hearth (14) and cleaning of the flue gases where the flue gases are guided from the smelting chamber (12) into the main hearth (14)
characterised in that
the temperature (T₂) in the main hearth (14) is set at at least 1200°C, the flue gases in the main hearth (14) are held at this temperature (T₂) for a period (t) of at least 5 seconds and then quenched to a temperature (T₃) of less than 100°C.

2. Process according to claim 1, characterised in that the temperature (T₂) in the main hearth (14) is maintained by combustion of gas, in particular natural gas, with oxygen.

3. Process according to claim 1 or 2, characterised in that the atmosphere in the smelting furnace (10) is regulated at a reduced pressure.

4. Process according to any of claims 1 to 3, characterised in that circulation of the liquid metal is maintained from the main hearth (14) into the smelting chamber (12) and back into the main hearth (14).

5. Process according to any of claims 1 to 4, characterised in that the flue gases are quenched with water.

6. Device for performance of the process according to any of claims 1 to 5 with a Sidewell smelting furnace (10) containing a smelting chamber (12) and a main hearth (14), characterised in that after the smelting furnace (10) is connected a quenching device (34) for quenching the flue gases emerging from the main hearth (14).

7. Device according to claim 6, characterised in that before the smelting chamber (12) is connected a feed device (26) for feeding the smelting chamber (12), where flue gases from the smelting furnace (10) can be guided into the feed device (26) to dry the materials to be remelted.

8. Device according to claim 5 or 7, characterised in that between the smelting chamber (12) and the main hearth (14) is arranged a transfer line (31) for transfer of the flue gases from the smelting chamber (12) to the main hearth (14).

9. Device according to any of claim 6 to 8, characterised in that in the main hearth (14) are arranged gas oxygen burners (28).

10. Device according to any of claims 6 to 9, characterised in that for circulation of the liquid metal, a pumping chamber (16) with a metal pump (18) is provided which connects the main hearth (14) to the smelting chamber (12).

## Revendications

1. Procédé pour la récupération non polluante de l'aluminium et de ses alliages à partir de matériaux chargés de composés organiques, par refonte dans un four à fusion à puits latéral ("Sidewell") (10) ayant une chambre de fusion (12) ainsi qu'un four principal (14) et par purification des gaz de combustion, qui seront pour cela conduits de la chambre de fusion (12) vers le four principal (14), caractérisé par le fait que la température (T₂) dans le four principal (14) est réglée à au moins 1200 °C et que les gaz de combustion dans le four principal (14) sont maintenus pendant un temps d'arrêt (t) de 5 sec. minimum à cette température T₂ avant d'être trempés à une température (T₃) de moins de 100°C.

2. Procédé selon la revendication 1, caractérisé par le fait que la température (T₂) dans le four principal (14) est maintenue par la combustion d'un gaz - notamment du gaz naturel - avec de l'oxygène.

3. Procédé selon la revendication 1 ou 2, caractérisé par le fait que l'atmosphère dans le four à fusion (10) est réglée en dépression.

4. Procédé selon une des revendications 1 à 3, caractérisé par le fait qu'il est maintenu une circulation du métal fondu du four principal (14) vers la chambre de fusion (12) et en retour vers le four principal (14).

5. Procédé selon une des revendications 1 à 4, caractérisé par le fait que le trempage des gaz de combustion s'effectue avec de l'eau.

6. Dispositif pour la réalisation du procédé selon une des revendications 1 à 5 avec un four à fusion à puits latéral ("Sidewell") (10) ayant une chambre de fusion (12) ainsi qu'un four principal (14), caractérisé par le fait qu'un dispositif de trempage (34) pour tremper les gaz de combustion émanant du four principal (14) est intercalé après le four à fusion (10).

7. Dispositif selon la revendication 6, caractérisé par le fait qu'un appareil à charger (26) pour le chargement de la chambre de fusion (12) est intercalé avant cette chambre de fusion (12), ce qui permet de guider les gaz de combustion du four à fusion (10) dans l'appareil à charger (26) pour le séchage des matériaux à refondre.

8. Dispositif selon la revendication 6 ou 7, caractérisé par le fait qu'un conduit de transfert (31) pour guider les gaz de combustion de la chambre de fusion (12) au four principal (14) est placé entre la chambre de fusion (12) et le four principal (14).

9. Dispositif selon une des revendications 6 à 8, caractérisé par le fait que des brûleurs à gaz/oxygène (28) sont placés dans le four principal (14).

10. Dispositif selon une des revendications 6 à 9, caractérisé par le fait qu'une chambre de pompage (16) munie d'une pompe métallique (18) reliant le four principal (14) avec la chambre de fusion (12) est aménagée pour la circulation du métal fondu.
